# EUROPEAN PATENT SPECIFICATION

(11) **EP 1 260 455 B1**
(45) Date of publication and mention of the grant of the patent: **13.08.2003**
(21) Application number: 00990032.5
(22) Date of filing: 29.12.2000
(51) Int. Cl.: B65D 85/57, G11B 33/04

(54) **CASE FOR COMPACT DISKS, DIGITAL VIDEO DISKS AND THE LIKE WITH CONCEALED SNAPPING OF SUPPLEMENTARY TRAYS**
HÜLLE FÜR CD'S,DVD'S UND ÄHNLICHEM MIT SCHNAPPVORRICHTUNG FÜR ZUSÄTZLICHE TRÄGER
ETUI POUR DISQUES COMPACTS, DISQUES VIDEONUMERIQUES ET ANALOGUES POURVU D'UN EMBOITEMENT ESCAMOTE DE PLATEAUX SUPPLEMENTAIRES

(30) Priority: 09.02.2000 ES 200000292 U
(43) Date of publication of application: 27.11.2002
(73) Proprietor: Magnetic Imatge, S.A., 03440 Ibi (ES)
(72) Inventor: CERDA VILAPLANA, Gustavo, E-03440 Ibi (ES); CERDA TORRES, Ruben, E-03440 Ibi (ES)
(74) Representative: De Arpe Fernandez, Manuel
(86) International application number: ES0000503
(87) International publication number: WO01058784

(56) References cited:
- ES-A1- 2 133 131
- GB-A- 2 307 899
- US-A- 5 845 771

## Description

The present invention refers to a case for CD, DVD and similar that can be used indistinctly for a single disk or for an additional disk coupled in a supplementary tray.

Presently, DVD cases with supplementary trays to store additional disks are already known, where in the spine portion of the case elements are provided in the form of joint hinges that serve to insert in a plug-in and detachable way the corresponding hinge pivots provided in the supplementary tray.

For production cost reasons, it would be convenient that a single case type is adapted to store a single disk and, using a supplementary tray of the same, to store an additional disk.

As already mentioned, the cases that are part of the state of the previous technique have joints formed for inserted coupling of the supplementary tray in the interior portion of the spine of the case, so that if they are used without the supplementary tray to fulfill the objective mentioned before for the reduction of costs, they constitute a projecting formation from the interior of the case that besides hindering the maneuvers of the disk that should be housed inside, they determine an inappropriate visible finish and aspect.

But using the spine portion for optionally fitting a supplementary tray requires housings or hinges to be configured in this spine portion in order to fit the pivots of the supplementary tray, so the latter may rotate.

This means that if the case is used without a supplementary tray, the centre spine portion of the case displays salient formations made up of the above mentioned housings or hinges which, when the case is being used, are a problem to the user and are therefore rejected thereby, since they form coupling points and obstacles. In addition, when the case is being used with the optional supplementary tray, the fact of the supplementary tray occupying this central spine portion is a problem, because advantage is not taken of the storage capacity of the case since this area can be used to include other items which are usually incorporated into this type of case, such as, for example, informative leaflets or manuals referring to the contents of the CDs or DVDs in the said case, as is disclosed, for instance, through documents GB 2304690 A published on 26 March, 1997 in the name of Kiran Sodhi and ES 2140335 A published on 16 February, 2000 in the name of Antonia L6pez Más.

Thus, this invention starts with the idea that, to solve these problems, it suffices for the spine portion of the case directed inwards of the case to be free of formations providing an obstacle to the user and that, at the same time, the free space resulting in that spine portion may be used to contain other items such as leaflets, and that the necessary housings or hinges for the supplementary tray be configured for such purpose in the box portion of the case or, in other words, that the supplementary tray be arranged to occupy a plane located below the top of the side walls of the box portion of the case and parallel to the said portion of box, with the said plane extending precisely from the articulation or hinge line between the central spine portion and the box portion, so that, with the case closed, a space corresponding to the width of the central spine portion is configured above the plane of the tray, and housings for fitting the supplementary tray pivots next to the side walls of the box portion, where the said housings are U-shaped with tooth shaped retaining projections for inserting/removing the said supplementary tray pivots, are provided for such purpose.

US-5845771A which constitutes the document of the art closest to the invention discloses a case for CDs, DVDs or similar which excludes the idea of the above described invention, because the supplementary tray is arranged occupying the inside part of the central spine which joins the respective cover and box portions. In addition, here are described housings or hinges 21, 22 for a gyrating coupling of pivots 31, 33 of the supplementary tray 30, one of which, 21, is provided in the form of a bridge with a through orifice 211 for the respective pivot 31 of the said supplementary tray, such that fitting the supplementary tray calls for a manual operation incompatible with the automated assembly usual in series assembly processes of the cases which, in addition, when the supplementary tray is to be removed from its gyrating coupling in the housings or hinges 21, 22, there is a risk of breaking the pivot 31 which is coupled in hinge 21 in the form of a bridge.

The object of the invention is achieved by the features defined in the appended claim.

The invention will be more clear from the following description, carried out with the help of the annexed drawings, relative to a non-limiting execution example and where,
Figure 1 shows a cross section view of a case according to the invention with its supplementary tray in a disassembled position.
Figure 2 illustrates a detail of a housing for the pivots of the supplementary tray.

As observed in the figures, the case generally designated with the numeric reference 1 is constituted as known, with a cover portion 2 and a box portion (3) joined to each other by means of a central spine portion (4), foreseeing a turning supplementary tray 5 that can be mounted or disassembled in the box portion 3 by means of insertion.

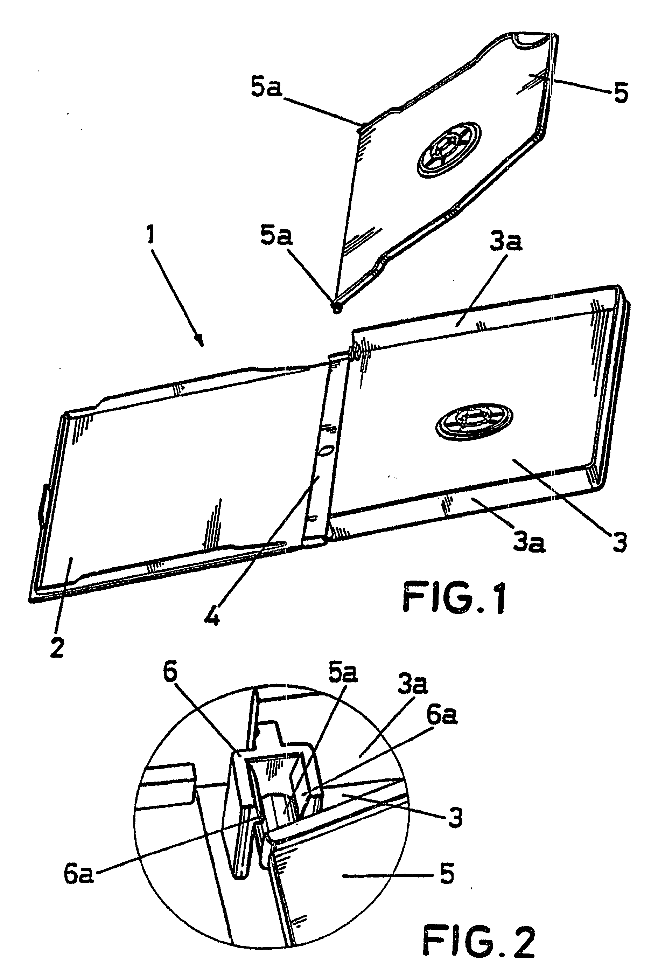

As may be seen with more detail in figure 2, in the free ends of the side walls 3a of the box portion 3, some housings are provided in a U-shape 6 open above and toward the inside of the box portion 3 and where they are inserted in a detachable way with the possibility of turning pivots 5a correspondingly provided in a pair of opposite corners of the supplementary tray 5. Additionally, in the inside part of the mentioned housings in U-shape, retention projections 6a are provided in the form of teeth that facilitate the insertion of the pivots 5a of the supplementary tray 5.

This arrangement and form of the housings is perfectly compatible with the molding process for plastic materials that are used for the production of the case, so that its arrangement does not imply any additional costs.

As the invention has been sufficiently described, it is only necessary to highlight that the executions derived from changes in form, dimensions, materials and similar, as well as those derived from a routine application of that previously revealed, must be considered as included in its scope, so that the invention will only be limited by the scope of the following claims.

## Claims

1. Case for compact disks, digital video disks and similar with a concealed encasing of a supplementary tray of the type with respective portions of cover (2) and box (3) articulated or hinged to a central spine portion (4) through articulation or hinge lines and a supplementary tray (5) with pivots (5a) provided in opposing corners thereof which are coupled in housings (6) of the case (1), ***characterized* in that**
- the supplementary tray (5) is arranged to occupy a plane located below the top of the side walls (3a) of the box portion (3) of the case,
- the plane occupied by the supplementary tray (5) may be located parallel to the said box portion (3), and extends precisely *in the* middle of the two articulation or hinge lines of the central spine portion (4) with the box portion (3) and case cover portion (2).
- such that, with the case closed, a space corresponding to approximately half the thickness of the central spine portion is configured inside the case (1) above the plane occupied by the tray (4), and
- the housings (6) for encasing the pivots (5a) of the supplementary tray (5) having a height approximately half the width of the central spine portion (4), and are provided next to the side walls (3a) of the box portion (3), and said housings (6) are U-shaped with tooth shaped retaining projections (6a) for facilitating insertion/removal of the said pivots (5 a) of the supplementary tray (5).

## Patentansprüche

1. Hülle für Compact Discs, digitale Videodiscs und ähnliche Discs mit verdecktem Gehäuse für ein zusätzliches Fach mit dem dementsprechenden Abdeckungsteil (2) und Gehäuseteil (3), die an einem zentralen Rückenteil (4) gelenkig oder mit Scharnieren über Reihen von Gelenken oder Scharnieren befestigt sind, und ein zusätzliches Fach (5) mit Zapfen (5 a), die an den gegenüberliegenden Ecken davon angebracht sind und in Zapfenlöchern (6) der Hülle (1) untergebracht sind; **dadurch gekennzeichnet, dass**:
• das zusätzliche Fach (5) so entworfen ist, dass es eine Ebene unter dem höchsten Teil der Seitenwände (3 a) des Gehäuseteiles (3) der Hülle belegt;
• die obere, vom zusätzlichen Fach (5) belegte Ebene parallel zum besagten Gehäuseteil (3) situiert werden kann und sich dann genau im Mittelteil zwischen den beiden Gelenk- oder Scharnierlinien des zentralen Rückenteils (4) mit dem Gehäuseteil (3) und dem Hülleabdeckungsteil (2) erstreckt;
• sodass bei geschlossener Hülle über der vom Fach (4) belegten Ebene innerhalb der Hülle (1) ein Raum gebildet wird, der ungefähr der halben Dicke des zentralen Rückenteils entspricht; und:
• die Löcher (6) zum Einfügen der Zapfen (5 a) des zusätzlichen Faches (5) eine Höhe haben, die ungefähr der halben Breite des zentralen Rückenteils (4) entspricht, und sich neben den Seitenwänden (3 a) des Gehäuseteils (3) befinden, und die besagten Löcher (6) U-förmig sind und zahnförmige Rückhaltervorsprünge (6 a) haben, damit die Einfügung/Lösung der besagten Zapfen (6 a) des zusätzlichen Faches (5) ermöglicht wird.

## Revendications

1. Etui pour disques compacts, disques vidéo-numériques et analogues, pourvu d'un emboîtement escamoté de plateaux supplémentaires du type muni de portions de couvercle (2) et de boîte (3) respectives, articulées sur une portion du flanc central (4) au moyen de lignes d'articulation ou de charnières et un plateau supplémentaire (5) à pivots (5 a) prévus aux angles opposés du plateau, qui sont insérés dans des cavités (6) de l'étui (1), **caractérisé en ce que**:
• le plateau supplémentaire est disposé de manière à occuper un plan situé en-dessous de la partie la plus haute des parois latérales (3 a) de la portion de boîte (3) de l'étui;
• le plan occupé par le plateau supplémentaire (5) peut être situé parallèlement à ladite portion de boîte (3) et s'étend exactement sur la partie médiane entre les deux lignes d'articulation ou de charnière de la portion centrale du flanc et
• les cavités (6) destinées à emboîter les pivots (5 a) du plateau supplémentaire (5) ont une hauteur d'environ la moitié de la largeur de la portion centrale du flanc (4) et sont prévues à côté des parois latérales (3 a) de la portion de la boîte (3); ces cavités (6) sont en forme de U avec des projections de retenue en forme de dent (6 a) facilitant l'insertion ou la séparation de ces pivots (6 a) du plateau supplémentaire (5).
